# EUROPÄISCHE PATENTSCHRIFT

(11) **EP 2 222 785 B1**
(45) Veröffentlichungstag und Bekanntmachung des Hinweises auf die Patenterteilung: **24.10.2012**
(21) Anmeldenummer: 08775261.4
(22) Anmeldetag: 21.07.2008
(51) Int. Cl.: C08L 63/00, C08L 63/02

(54) **THERMOPLAST-HALTIGE EPOXIDHARZE UND DEREN VERARBEITUNG DURCH EXTRUSION ODER SPRITZGUSS**
THERMOPLAST-CONTAINING EPOXY RESINS AND THE PROCESSING THEREOF BY EXTRUSION OR INJECTION MOLDING
RÉSINES ÉPOXY CONTENANT UN THERMOPLASTIQUE, ET LEUR MISE EN OEUVRE PAR EXTRUSION OU INJECTION

(30) Priorität: 19.12.2007 DE 102007061860
(43) Veröffentlichungstag der Anmeldung: 01.09.2010
(73) Patentinhaber: Henkel AG & Co. KGaA, 40589 Düsseldorf (DE)
(72) Erfinder: MÜNZ, Xaver, 69117 Heidelberg (DE)
(86) Internationale Anmeldenummer: PCT/EP2008/059536
(87) Internationale Veröffentlichungsnummer: WO 2009/077212

(56) Entgegenhaltungen:
- WO-A-2005/052054

## Beschreibung

Die vorliegende Erfindung betrifft die Verwendung von Epoxidharz-Thermoplast-Mischungen, zur Strukturversteifung von Bauteilen, insbesondere für den Fahrzeugbau.

Leichtbauteile für eine konstant maßhaltige Serienfertigung mit hoher Steifigkeit und Strukturfestigkeit werden für viele Anwendungsfelder benötigt. Insbesondere im Fahrzeugbau ist wegen der dort gewünschten Gewichtsersparnis ein hoher Bedarf für Leichtbauteile aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch zur leichten Deformation. Daher ist es bereits seit einiger Zeit bekannt, bei Hohlkörperstrukturen diesen Hohlraum mit einem Strukturschaum auszuschäumen, wodurch einerseits die Deformation oder Verformung verhindert oder minimiert wird und andererseits Festigkeit und Steifigkeit dieser Teile erhöht werden.

Üblicherweise sind derartige geschäumte Verstärkungs- und Versteifungsmittel entweder Metallschäume oder sie enthalten ein thermisch härtbares Harz oder Bindemittel wie z.B. Epoxidharze. Diese Zusammensetzungen enthalten in der Regel ein Treibmittel, Füllstoffe und verstärkende Füllstoffe wie z.B. Mikrohohlkugeln aus Glas. Vorzugsweise haben solche Schäume im aufgeschäumten und ausgehärteten Zustand eine Dichte von 0,3 bis 0,7 g/cm³. Diese Schäume sollen nach der Aushärtung Temperaturen von mehr als 130°C, vorzugsweise mehr als 150°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

Die WO 96/37400 beschreibt ein W-förmiges Verstärkungsgebilde, das ein thermisch expandierbares, harzartiges Material enthält und vor der Aushärtung in den zu verstärkenden Hohlkörper eingebracht wird. Die verstärkende polymere Matrix besteht vorzugsweise aus einem einkomponentigen, teigartigen System enthaltend ein Epoxidharz, einen Acrylnitril-Butadienkautschuk, Füllstoffe, hochfeste Glaskugeln, einen Härter sowie einen Beschleuniger und ein Treibmittel auf der Basis einer Azo-Verbindung oder einer Hydrazid-Verbindung.

In der WO 00/27920 werden expandierbare Abdichtungs- und Dämpfungszusammensetzungen offenbart, die Mischungen von einem thermoplastischem Harz bzw. mehreren thermoplastischen Harzen und einem Epoxidharz sind. Diese sollen spritzgießbar sein und ein leichtes Gewicht besitzen und eine hohe Druckfestigkeit aufweisen. Als Beispiele thermoplastischer Harze werden genannt: Festkautschuke wie Styrol-Butadien-Kautschuke und Nitril-Butadien-Kautschuke oder Polystyrol-Polymere wie beispielsweise SBS-Blockcopolymere. Das Epoxidharz ist vorzugsweise flüssig.

In WO 00/52086 wird vorgeschlagen, hitzehärtbare, thermisch expandierbare Formkörper aus einer Mischung bestehend aus mindestens einem festen reaktiven Harz, mindestens einem flüssigen reaktiven Harz, mindestens einem flexibilisierend wirkenden reaktiven Harz sowie Härtern und/oder Beschleunigern oder Treibmitteln herzustellen. Diese Formkörper eignen sich zum Versteifen und/oder Verstärken von dünnwandigen Metallkonstruktionen sowie zum Versteifen von hohlen metallischen Leichtbaukonstruktionen. Gegenüber bekannten hitzehärtbaren, thermisch expandierbaren Formkörpern zeichnen sich die Formkörper gemäß der Lehre dieser Schrift durch verbesserte Formstabilität im ungehärteten Zustand sowie durch eine geringe Oberflächenklebrigkeit aus. Erzielt werden die Eigenschaften Verarbeitbarkeit und Formstabilität durch Mischen von Epoxidharzen mit unterschiedlichem Schmelzpunkt. Allerdings ist beispielsweise die verminderte Oberflächenklebrigkeit immer nur in einem sehr eng begrenzten Temperaturintervall zu erzielen, so dass eine Formulierung, die im Winter zwar klebfrei ist, im Sommer eine stark klebrige Oberfläche aufweist. Weiterhin erfordert diese Vorgehensweise den Einsatz von großen Mengen an teuren Harzen und Härtungssystemen. Insbesondere für die kostengünstige Herstellung derartiger expandierbarer Formkörper im Spritzgussverfahren treten immer wieder Schwierigkeiten bei der Fertigung und Handhabung auf, dies ist für eine Prozess-Sicherheit des Herstellverfahrens unerwünscht.

Die nicht vorveröffentlichte deutsche Patentanmeldung DE 102006048739 beschreibt Bindemittel zur Herstellung expandierbarer, thermisch härtbarer Formkörper, die
mindestens ein Epoxidharz,
mindestens einen bei Raumtemperatur festen Polyester,
mindestens ein Treibmittel,
mindestens einen Härter und
mindestens einen Füllstoff enthalten.

Das Dokument WO 2005/052054 A offenbart Polymermischungen, die ein Epoxidharz und einen Thermoplast enthalten (siehe Seite 1 Zeilen 1-5 und Seite 3 Zeilen 15-20). Die Beispiele 1, 2, 5 und 6 von WO 2005/052054 A beschreiben Stoffgemische, die aus folgenden Komponenten bestehen:
- ein Epoxidharz,
- ein Härter,
- 1, 20 oder 40 Gew.-% eines Styrol-Butadien-Methylmethacrylat-Copolymers.
Die Mischung wird mit Hilfe eines Extruders verarbeitet und Fasern daraus hergestellt. Die Fasern werden zur Verstärkung von Textil-Geweben verwendet.

Zusätzlich können "Flexibilisierungsmittel" enthalten sein. Als Flexibilisierungsmittel werden beispielsweise Festkautschuke genannt. Beispiele für geeignete Festkautschuke sind Polybutadien, Styrol-Butadien-Kautschuk, Butadien-Acrylnitril-Kautschuk, EPDM, synthetischer oder natürlicher Isoprenkautschuk, Butylkautschuk oder Polyurethankautschuk. Besonders geeignet sind teilvernetzte Festkautschuke auf der Basis von Isopren-Acrylnitril- oder Butadien-Acrylnitril-Copolymeren.

Dreidimensionale Teile aus Strukturschäumen werden heute üblicherweise im Spritzgussverfahren hergestellt. Aufgrund der Klebrigkeit der Materialen bei Temperaturen oberhalb von 30°C kann das Ausgangsmaterial zur Teileherstellung durch das Spritzgussverfahren nicht als Granulat eingesetzt werden. Um dennoch Teile nach diesem Verfahren herstellen zu können, muss die Materialzuführung zur Spritzgussmaschine kostspielig modifiziert werden. Es ist eine spezielle Zuführung erforderlich und damit ist es nicht möglich, die Teileherstellung auf beliebigen handelsüblichen Spritzgussmaschinen durchzuführen.

Werden Formulierungen mit höherem Schmelzpunkt eingesetzt, um den Erweichungspunkt auf ca. 40°C zu erhöhen, muss das Strukturschaum-Teil in der Spritzgussmaschine bei höheren Temperaturen verarbeitet werden, um die Formen zu füllen. Temperaturen über 100 °C sind nicht zulässig, da sonst die Aushärtereaktion der Zusammensetzung angestoßen wird und dies zur Blockade der Maschine führen kann.

Bedingt durch die hohe Viskosität bei Temperaturen knapp oberhalb des Schmelzpunkts der Epoxidharze und besonders durch die Klebrigkeit der verflüssigten Epoxidharze ist die Herstellung von Spritzgussteilen nur sehr schlecht und unter erheblichem technischen Aufwand möglich. Dies macht meist Sonderausstattungen an den Verarbeitungsmaschinen erforderlich und erhöht damit die Investitionskosten.

Durch die innere Klebrigkeit der Schmelzgussmasse wird das Fließverhalten in der Spritzgussmaschine und den Spritzgussformen stark verschlechtert. Die Klebrigkeit der warmen Spritzgussmasse auf Basis von Epoxidharzen kann zu einer Verschmutzung der Anlagen führen und hierdurch Wartungs- und Reinigungskosten deutlich erhöhen. Zur Abhilfe können Trennmittel eingesetzt werden. Dies kann jedoch zu einer Korrosion an Werkzeugen und Maschinen führen, was wiederum den Wartungsbedarf erhöht.

Die vorliegende Erfindung stellt sich die Aufgabe, Spritzgussmassen auf Basis von Epoxidharzen zur Verfügung zu stellen, bei denen die vorstehend genannten Probleme nicht oder in deutlich verringerten Ausmaß auftreten.

Diese Aufgabe wird durch den Zusatz geeigneter Thermoplaste zur Epoxidharzmischung gelöst. Es ist bekannt, dass Thermoplaste einen elastifizierenden Effekt auf Epoxidharze haben. Die vorliegende Erfindung beruht auf der Erkenntnis, dass spezielle Thermoplaste die Klebrigkeit der Epoxidharz-Schmelze- oder -Mischung deutlich herabsetzen und das Verkleben der Maschinenteile vermindern bzw. ganz verhindern. Dies kann sogar soweit führen, dass für solche Mischungen völlig auf die Verwendung von Trennmittel verzichtet werden kann. Durch die Verringerung der Klebrigkeit der Spritzgussmasse wird das Fließverhalten bei dem Einspritzprozess deutlich verbessert. Dies führt zu einem verbesserten Ausfüllen der Form, zu einer Reduzierung der Zykluszeit und somit zur Senkung von Produktionskosten. Aufgrund der reduzierten Klebrigkeit kann auf eine spezielle Verpackung zum Schutz der Fertigteile verzichtet werden. Durch geeignete Wahl des Thermoplasten kann die Härte der erstarrten Spritzgussmasse so eingestellt werden, dass sogar Schüttgut (insbesondere für Kleinteile) möglich wird.

Ein Gegenstand der vorliegenden Erfindung ist demnach die Verwendung extrudierter oder spritzgegossener Formkörper zur Versteifung und Verstärkung von Bauteilen, insbesondere Bauteilen für weiße Ware oder von Karosseriebauteilen wie Karosserierahmen, Türen, Kofferraumdeckel, Motorhauben und / oder Dachteiten im Automobilbau, wobei die extrudierten oder spritzgegossenen Formkörper bestehen aus einem Stoffgemisch enthaltend eine Polymermischung, die zumindest ein Epoxidharz und einen oder mehrere Thermoplaste enthält, wobei die Thermoplaste ausgewählt sind aus solchen Copolymeren, die mindestens drei unterschiedliche Monomere enthalten, und wobei der Masseanteil der Thermoplaste an dem gesamten Stoffgemisch im Bereich von 0,5 bis 40 Gew.-% liegt.

Hierfür sind insbesondere Thermoplaste geeignet, die ausgewählt sind aus solchen, bei denen mindestens ein Monomer einen Kohlenwasserstoff ohne Heteroatome und mit mindestens einer C = C - Doppelbindung und mindestens ein anderes Monomer ein gegebenenfalls substituiertes Acrylat oder einen gegebenenfalls substituierten Acrylsäureester darstellt. Insbesondere können geeignete Thermoplaste ausgewählt sein aus folgenden Copolymeren: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, die jeweils als statistische Copolymere oder als Blockcopolymere vorliegen können.

Dabei bedeutet wie üblich der Vorsatz "(Meth)" vor "Acrylat", das es sich bei diesen Monomeren sowohl um Acrylat bzw. Acrylsäureester als auch um Methacrylat bzw. Methacrylsäureester handeln kann. Sofern die Copolymere Acrylsäureester bzw. Methacrylsäureester enthalten, ist die Alkoholkomponente des Esters vorzugsweise ausgewählt aus solchen, die 1 bis 6 C-Atorne enthalten. Insbesondere können Methylester und Ethylester eingesetzt werden.

Konkrete Beispiele einsetzbarer Thermoplaste sind: Blockcopolymere aus Styrol, Butadien und Methacrylat, Terpolymere aus Ethylen, Butylacrylsäureester und Glycidylmethacrylsäureester, Terpolymere aus Ethylen, Acrylsäureester und Maleinsäureanhydrid. Diese Thermoplaste ergeben in Verbindung mit dem Epoxidharzen nach deren Härtung Massen, die bis 40°C hart und formstabil sind und sich zur Herstellung von Schüttgut eigenen. Weiterhin führen diese Terpolymere nur zu einer geringfügigen Absenkung der Glasübergangstemperatur, so dass sich die erfindungsgemäßen Stoffgemische bestens für die Verwendung in der Automobilindustrie bei Prüfbedingungen bis zu 80°C eignen.

Als Epoxidharze eignen sich eine Vielzahl von Polyepoxiden, die mindestens zwei 1,2-Epoxigruppen pro Molekül haben. Dabei werden vorzugsweise solche Epoxidharze eingesetzt, die vor ihrer Reaktion mit einem Härter einen Schmelz- oder Erweichungspunkt von mindestens 50°C aufweisen, wobei der Erweichungspunkt gemäß Produktinformation von Dow Plastics (eine Geschäftseinheit der Dow Chemical Company) nach der Vorschrift RPM 108-C bestimmt wird.

Das Epoxid-Äquivalent geeigneter Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Gegebenenfalls können die Bindemittel-Zusammensetzungen Reaktivverdünner zum Einstellen des Fließverhaltens enthalten. Reaktive Verdünner im Sinne dieser Erfindung sind Epoxigruppen enthaltende, niederviskose Substanzen (Glycidylether oder Glycidylester) mit aliphatischer oder aromatischer Struktur. Typische Beispiele für Reaktivverdünner sind Mono-, Di- oder Triglycidylether von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄- Carbonsäuren oder deren Mischungen.

Vorzugsweise sind die erfindungsgemäße verwendeten Stoffgemische härtbar und/oder thermisch expandierbar. Sie eignen sich dann für den eingangs beschriebenen Verwendungszweck der Verstärkung bzw. Aussteifung von Hohlteilen, insbesondere von Hohlteilen im Automobilbau.

Als Treibmittel eignen sich im Prinzip alle bekannten Treibmittel wie z. B. die "chemischen Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" bzw. "Expancel®" von den Firmen Pierce & Stevens bzw. Casco Nobel im Handel erhältlich.

Als Härter werden thermisch aktivierbare oder latente Härter für das Epoxidharz-Bindemittelsystem eingesetzt. Diese können ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Bevorzugt ist Dicyandiamid geeignet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N, N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethyaminoethanol, N-substituierte Piperazine, N-substituierte Homopiperazine, N-substituierte Aminophenole an Di- oder Polyglycidylether des Bisphenols A oder F oder des Resorcins.

In der Regel enthalten die erfindungsgemäß verwendbaren Stoffgemische weiterhin an sich bekannte Füllstoffe wie zum Beispiel die diversen gemahlenen oder gefällten Kreiden, Ruß, Calcium-Magnesiumcarbonate, Talkum, Schwerspat sowie insbesondere silikatische Füllstoffe vom Typ des Aluminium-Magnesium-Calcium-Silicats, z. B. Wollastonit, Chlorit. Vorzugsweise können Glimmer-haltige Füllstoffe mit verwendet werden, ganz besonders bevorzugt ist hier ein so genannter 2- Komponentenfüllstoff aus Muskovit-Glimmer und Quarz mit niedrigem Schwermetallgehalt.

Zur Gewichtsreduzierung kann das Stoffgemisch zusätzlich zu den vorgenannten "normalen" Füllstoffen sog. Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die Zusammensetzungen für die thermisch härtbaren Massen zusätzlich Fasern auf der Basis von Aramidfasern, Kohlenstoff-Fasern, Metallfasern - z.B. aus Aluminium-, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Ein bevorzugte verwendetes Stoffgemisch gemäß der vorliegenden Erfindung enthält daher:
a) mindestens ein Epoxidharz,
b) mindestens einen Thermoplasten ausgewählt aus solchen Copolymeren, die mindestens drei unterschiedliche Monomere enthalten,
c) mindestens ein Treibmittel,
d) mindestens einen Härter,
e) mindestens einen Füllstoff,
wobei für bevorzugt auszuwählende Komponenten die vorstehenden Erläuterungen gelten.

Weiterhin können die erfindungsgemäß verwendboren härtbaren Massen gängige weitere Hilfs- und Zusatzmittel wie z. B. Weichmacher, Reaktiwerdünner, Rheologie-Hilfsmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie der klebende Verbund zu den Substraten können die Mengenverhältnisse der Einzelkomponenten in verhältnisnmäßig weiten Grenzen variieren.

Typische Bereiche für die wesentlichen Komponenten sind:

| | |
|---|---|
| Epoxidharz | 2 bis 70 Gew.%, vorzugsweise 15 bis 60 Gew.-%, |
| Thermoplast | 0,5 bis 40 Gew.%, vorzugsweise 5 bis 30 Gew.%, |
| Reaktivverdünner | 0 bis 15 Gew.%, vorzugsweise 0 bis 10 Gew.%, |
| Härter und Beschleuniger | 1,5 bis 5 Gew.%, |
| Treibmittel | 0,5 bis 10 Gew.%, |
| Füllstoffe (außer Fasern) | 5 bis 40 Gew.%, |
| Fasern | 0 bis 30 Gew.%, vorzugsweise 0,5 bis 10 Gew.%, |
| Pigmente | 0 bis 1 Gew.%, |

wobei die Summe der Gesamtbestandteile 100 Gew.% ergibt.

Die erfindungsgemäß verwendeten Zusammensetzungen lassen sich leicht in Granulatform herstellen und können so leicht in herkömmlichen Containern, Big Bags, Fässern oder Säcken zwischengelagert und transportiert werden. Sie können in konventionellen Spritzgießanlagen ohne spezielle Vorrats- Dosier und Fördereinrichtungen weiterverarbeitet werden. Die aus diesen Zusammensetzungen herstellbaren Strukturschäume haben vergleichbar gute Eigenschaften bei Druck- oder Biegebelastung wie die bisher bekannten Zusammensetzungen auf Basis von Epoxiden. Überraschenderweise zeigen die erfindungsgemäßen Zusammensetzungen trotz gutem Fliessverhalten in der Spritzguss-Maschine im Fertigungsablauf des Rohbaus bei der Fahrzeugherstellung in den Reinigungs- und Vorbehandlungsbädern bei 65°C und gleichzeitiger Strömungsbelastung kein Ablaufen oder Auswaschen. Außerdem ist in keine Klebrigkeit der Formkörper oder Granulate bei Temperaturen unter 45°C festzustellen.

Vorzugsweise werden aus den expandierbaren, thermisch härtbaren Zusammensetzungen im Spritzgussverfahren bei niedrigen Drücken und niedrigen Temperaturen thermisch expandierbare Formkörper hergestellt, die zum Versteifen und/oder Verstärken von metallischen Bauteilen verwendet werden.

Demnach betrifft die vorliegende Erfindung auch die Verwendung von Formkörpern, die hergestellt werden, indem man das Stoffgemisch mit Hilfe eines Extruders bei einer Temperatur im Bereich von 50 bis 100°C durch eine Matrize extrudiert und nach Abkühlen auf eine Temperatur unterhalb von 50°C in Stücke schneidet. Bei der Extrusion durch eine entsprechend geformte Matrize und Abschneiden auf die erwünschte Länge können so (vorzugsweise härtbare und thermisch expandierbare) Formkörper hergestellt werden, deren Form an den zu versteifenden Hohlraum angepasst ist.

Auf diese Weise erhält man beispielsweise einen Formkörper aus einer reaktiven, vorzugsweise vernetzenden und bei einer Temperatur im Bereich von 120 bis 220°C um mindestens 20 % expandierbaren Masse. Vorzugsweise weist dieser mindestens ein Befestigungselement und/oder mindestens einen Abstandhalter mit jeweils einer Vorder- und einer Rückseite auf, die dadurch definiert sind, dass der gesamte Formkörper einschließlich des Befestigungselements oder des Abstandshalters durch zwei parallele ebene Flächen begrenzt ist, wobei die Vorderseite jedes Befestigungselements oder jedes Abstandshalters in der einen der parallelen Flächen und die Rückseite in der anderen der parallelen Flächen liegt. Er wird eingesetzt zur Verstärkung, Dämmung, Dämpfung und/oder Abdichtung von Hohlbauteilen. Eine genauere Beschreibung eines derartigen Formkörpers und Details zum Verfahren seiner Herstellung können der nicht vorveröffentlichten Deutschen Patentanmeldung DE 102007038659 entnommen werden.

Weiterhin betrifft die vorliegende Erfindung die Verwendung von Formkörpern, die hergestellt werden, indem man das Stoffgernisch mit Hilfe eines Extruders bei einer Temperatur im Bereich von 50 bis 100°C in eine Spritzgussform einbringt und nach Abkühlen auf eine Temperatur unterhalb von 50°C entformt.

Dabei kann man für die Extrusion von einem Stoffgemisch ausgehen, das als vorgemischte, aber ungeformte Masse in den Extruder eingespeist oder das erst im Extruder selbst aus den einzelnen Rohstoffen zusammengemischt wird. Es ist jedoch auch möglich, das Stoffgemisch in Form des vorstehend beschriebenen Granulates einzusetzen. Dieses wird dann vor dem Eintragen in den Extruder oder vorzugsweise im Extruder selbst aufgeschmolzen und in diesem Zustand in die Spritzgussform gepresst.

Diese Variante ist gekennzeichnet, durch die folgenden wesentlichen Verfahrensschritte:
a) Mischen der zuvor beschriebenen Zusammensetzungs-Bestandteile bei Temperaturen unterhalb von 100°C, vorzugsweise zwischen 80 und 95°C
b) Extrusion der Zusammensetzung bei Temperaturen unterhalb von 100°C, vorzugsweise 80°C bis 95°C, unter Granulatbildung ggf. auf ein gekühltes Metallband,
c) Abkühlen des so geformten Granulats,
d) ggf. Zwischenlagerung des Granulats, vorzugsweise in Containern, Big Bags, Fässern oder Säcken,
e) Förderung des Granulates in eine Spritzguss-Maschine,
f) Ausschmelzen des Granulates bei Temperaturen unterhalb von 100°C und Injektion der Schmelze in die vorbestimmte Form der Spritzguss-Maschine,
g) Abkühlen des gebildeten Formkörpers und Entnahme des Formkörpers aus der Form.

Durch den Zusatz des oder der Thermoplaste verringert sich die Klebrigkeit der Epoxidharzhaltigen Masse soweit, dass für den Extrusions- bzw. Spritzgussprozess kein Trennmittel eingesetzt werden muss.

Die vorliegende Erfindung umfasst auch ein Fahrzeug oder metallisches Bauteil, das mit mindestens einem der vorstehend beschriebenen, durch Extrusion, insbesondere durch Konturextrusion, oder durch Spritzguss erhaltenen, Formkörper versteift oder verstärkt wurde

Insbesondere umfasst die vorliegende Erfindung ein Verfahren zur Verstärkung, Dämmung, Dämpfung und/oder Abdichtung von Hohlbauteilen, wobei man einen erfindungsgemäßes erhaltenen Formkörper vor der Fertigstellung des Hohlbauteils an einer Innenwand des Hohlbauteils befestigt, das Hohlbauteil schließt und auf eine Temperatur im Bereich von 120 bis 220°C erwärmt, vorzugsweise für eine Zeitdauer im Bereich von 10 bis 150 Minuten.

Für dieses Verfahren macht man sich den üblichen Produktionsprozess für langgestreckte Hohlstrukturen im Fahrzeugbau, beispielsweise für den Rahmen, der die Fahrgastzelle umgibt, zunutze. Diese Hohlstrukturen werden üblicherweise so gefertigt, dass man zwei entsprechend geformte Halbschalen aus Metall herstellt und diese Halbschalen zu der hohlen Rahmenstruktur bzw. eines Teils hiervon zusammenfügt. Solche Hohlstrukturen oder Hohlträger sind beispielsweise die A-, B- oder C-Säule einer Automobilkarosserie, die die Dachstruktur tragen, oder auch Dachholme, Schweller sowie Teile der Radhäuser oder Motorträger. Wie beim Einsetzen von so genannten "pillar fillee" oder "baffles" in derartige Hohlstrukturen im Stand der Technik üblich, kann der erfindungsgemäß erhaltene Formkörper mit Hilfe eines Befestigungselements oder eines klebrigen Oberflächenabschnitts an der später zur Innenwand des Hohlraums werdenden Oberfläche der einen Halbschale befestigt werden, bevor man diese mit der anderen Halbschale zur Ausbildung der Hohlstruktur zusammenfügt.

Dabei ist der erfindungsgemäß verwendete Formkörper vorzugsweise so geformt, dass sein senkrecht zur Längsachse gesehener Querschnitt der Querschnittsform des Hohlraums entspricht. Der Formkörper ist jedoch so dimensioniert, dass es vor dem Aufschäumen nur an einer oder wenigen Stellen mit der Innenwand des Hohlteils Kontakt hat. Von diesen Stellen abgesehen verbleibt zwischen den parallel zur Längsachse des Formkörpers liegenden Begrenzungsflächen und den Innenwänden des Hohlteils ein Flutspalt einer Breite von etwa 1 bis etwa 10 mm, vorzugsweise von etwa 2 bis etwa 4 mm. Dieser Flutspalt gewährleistet, dass die diversen Prozessflüssigkeiten, mit denen die Rohbaukarosserie behandelt wird, alle Teile der Innenseiten der Hohlraumwände benetzen können. Der Flutspalt schließt sich erst bei der thermischen Expansion des Formkörpers, wodurch dieser seine Zweckerfüllung der Verstärkung, Dämmung, Dämpfung und/oder Abdichtung der Hohlbauteile erreicht. Abstandshalter an den Form körpern können gewährleisten, dass dieser Flutspalt vor dem Aufschäumen des Formkörpers zuverlässig entsteht und bis zum Aufschäumen erhalten bleibt. Beispiele

Die nachfolgende Tabelle enthält als Beispiele 1 bis 3 erfindungsgemäß verwendete Stoffgemische sowie die Vergleichs-Stoffgemische 1 bis 3. Die Mengenangaben verstehen sich als Gewichtsprozent bezogen auf die gesamte Zusammensetzung. Als Epoxidharz wurde ein bei 20°C festes Epoxidharz mit einem Erweichungspunkt nach Vorschrift RPM 108-C im Bereich von 75 bis 85°C eingesetzt. Das Epoxid-Äquivalentgewicht liegt im Bereich von 475 bis 550 g/eq.

SBS und EVA sind zum Vergleich eingesetzte Thermoplaste, die nicht zu einem ausreichenden erfindungsgemäßen Effekt führen. Als "Terpolymer" und "Blockpolymer" werden erfindungsgemäß einzusetzende Thermoplaste bezeichnet, die zu den erwünschten Ergebnissen führen. In den Ausführungsbeispielen wurde als Terpolymer zum einen ein Terpolymer aus Ethylen, Methylacrylsäureester und Glycidylmethacrylsäureester oder ein Terpolymer aus Ethylen-Acrylsäureester und Maleinsäureanhydrid eingesetzt, die zu vergleichbaren Ergebnissen führen. Als Blockpolymer wurde ein Styrol-Butadien-Methacrylat-Polymer eingesetzt.

Die einzelnen Rohstoffe wurden in einem Doppelschneckenextruder miteinander vermischt. Hierbei wurden in einem ersten Schritt Epoxidharz, Thermoplast und Füllstoffe, danach Glasfasern und Glashohlkugeln und in einem letzten Schritt die Reaktivkomponenten (Härter, Beschleuniger, Treibmittel) zugegeben. Für die Spritzgussversuche wurden folgende Parameter eingestellt:
Temperatur von Zylinder und Schnecke: 90°C;
Dosiergeschwindigkeit: 25 m/min;
Rückdruck: 10 bar;
Dosiervolumen Spirale/Blatt: 80 cm³/8 cm³;
Injektionsdruck: 400 bar;
Injektionszeit: 4 sek.;
Temperatur der Spritzgussform: 15°C;
Abkühlzeit: 10 sek.

Die erhaltenen Spritzgussteile wurden hinsichtlich ihrer Klebrigkeit bei 40°C und 70°C ihrer Härte bei 40°C und der Spritzgussfähigkeit auf einer Bewertungsskala von 0 bis 5 beurteilt. Höhere Bewertungen bedeuten bessere anwendungstechnische Eigenschaften. Als akzeptabel wird eine Bewertung von mindestens 3 angesehen. Wie die Tabelle zeigt, erreichen die erfindungsgemäßen Zusammensetzungen in allen beurteilten Kriterien eine Bewertung von mindestens 3, während die Vergleichs-Zusammensetzungen in mindestens einem Kriterium eine Bewertung von 2 oder schlechter erreichen.

| | **Vergleich 2** | **Vergleich 3** | **Beispiel 1** | **Beispiel 2** | **Beispiel 3** | **Vergleich 1** |
|---|---|---|---|---|---|---|
| **Rohstoff** | | | | | | |
| | in % | in % | in% | in% | in % | in % |
| Epoxidharz | 40,00 | 40,00 | 40,00 | 40,00 | 50,00 | 60,00 |
| **SBS** | 20,00 | 0,00 | 0,00 | 0,00 | 0,00 | 0,00 |
| **EVA** | 0,00 | 20,00 | 0,00 | 0,00 | 0,00 | 0,00 |
| **Terpolymer** | 0,00 | 0,00 | 20,00 | 0,00 | 10,00 | 0,00 |
| **Blockpolymer** | 0,00 | 0,00 | 0,00 | 20,00 | 0,00 | 0,00 |
| Glasfaser | 5,00 | 5,00 | 5,00 | 5,00 | 5,00 | 5,00 |
| Glashohlkugeln | 15,00 | 15,00 | 15,00 | 15,00 | 15,00 | 15,00 |
| Sil icatischer Füllstoff | 7,00 | 7,00 | 7,00 | 7,00 | 7,00 | 7,00 |
| Calciumcarbonat | 7,90 | 7,90 | 7,90 | 7,90 | 7,90 | 7,90 |
| Pigment | 0,10 | 0,10 | 0,10 | 0,10 | 0,10 | 0,10 |
| Expandierbare Kunststoff-Mikrohohlkugeln | 2,30 | 2,30 | 2,30 | 2,30 | 2,30 | 2,30 |
| Epoxidharz-Aminaddukt | 0,60 | 0,60 | 0,60 | 0,60 | 0,60 | 0,60 |
| Dicyandiamid | 2,10 | 2,10 | 2,10 | 2,10 | 2,10 | 2,10 |
| | | | | | | |
| | | | | | | |
| | 100,00 | 100,00 | 100,00 | 100,00 | 100,00 | 100,00 |

| **Eigenschaften:** | | | | | | |
|---|---|---|---|---|---|---|
| Klebrigkeit bei 40°C | 5 | 4 | 5 | 4 | 4 | 4 |
| Klebrigkeit bei 70°C | 4 | 2 | 5 | 4 | 4 | 1 |
| Härte bei 40°C | 5 | 2 | 4 | 3 | 4 | 4 |
| Spritzguss-Fähigkeit | 1 | 5 | 4 | 3 | 3 | 1 |

| | | | | | | |
|---|---|---|---|---|---|---|
| Bewertung Klebrigkeit: Skala von 0 - 5 0 = sehr klebrig 5 =nicht klebrig Bewertung Härte: Skala von 0 - 5 0 = sehr hart 5 = sehr weich Bewertung SG-Fähigkeit Skala von 0-5 0 = sehr schlecht 5 = sehr gut | | | | | | |

## Patentansprüche

1. Verwendung extrudierter oder spritzgegossener Formkörper zur Versteifung und Verstärkung von Bauteilen, insbesondere Bauteilen für weiße Ware oder von Karosseriebauteilen wie Karosserierahmen, Türen, Kofferraumdeckel, Motorhauben und / oder Dachteilen im Automobilbau, wobei die extrudierten oder spritzgegossenen Formkörper bestehen aus einem Stoffgemisch enthaltend eine Polymermischung, die zumindest ein Epoxidharz und einen oder mehrere Thermoplaste enthält, wöbei die Thermoplaste ausgewählt sind aus solchen Copolymeren, die mindestens drei unterschiedliche Monomere enthalten, und wobei der Masseanteil der Thermoplaste an dem gesamten Stoffgemisch im Bereich von 0,5 bis 40 Gew.-% liegt.

2. Verwendung nach Anspruch 1, **dadurch gekennzeichnet, dass** der oder die Thermoplast(e) ausgewählt sind aus solchen, bei denen mindestens ein Monomer einen Kohlenwasserstoff ohne Heteroatome und mit mindestens einer C = C - Doppelbindung und mindestens ein anderes Monomer ein gegebenenfalls substituiertes Acrylat oder einen gegebenenfalls substituierten Acrylsäureester darstellt.

3. Verwendung nach Anspruch 2, **dadurch gekennzeichnet, dass** der oder die Thermoplast(e) ausgewählt sind aus folgenden Copolymeren: Styrol-Butadien-(Meth)Acrylat, Styrol-Butadien-(Meth)Acrylsäureester, Ethylen-(Meth)Acrylsäure-ester-Glycidyl(meth)acrylsäureester, Ethylen-(Meth)Acrylsäureester-Maleinsäureanhydrid, die jeweils als statistische Copolymere oder als Blockcopolymere vorliegen können.

4. Verwendung nach einem oder mehreren der Ansprüche 1 bis 3, **dadurch gekennzeichnet, dass** das Stoffgemisch zusätzlich einen Härter für das Epoxidharz und/oder ein Treibmittel enthält.

5. Verwendung nach einem oder mehreren der Ansprüche 1 bis 4, **dadurch gekennzeichnet, dass** das Stoffgemisch die folgenden Komponenten enthält
a) mindestens ein Epoxidharz,
b) mindestens einen Thermoplasten ausgewählt aus solchen Copolymeren, die mindestens drei unterschiedliche Monomere enthalten,
c) mindestens ein Treibmittel,
d) mindestens einen Härter,
e) mindestens einen Füllstoff.

6. Verwendung nach Anspruch 5, **dadurch gekennzeichnet, dass** das Stoffgemisch
| | |
|---|---|
| Epoxidharz | 2 bis 70 Gew.%, vorzugsweise 15 bis 60 Gew.-% |
| Thermoplast | 0,5 bis 40 Gew.%, vorzugsweise 5 bis 30 Gew.%, |
| Reaktivverdünner | 0 bis 15 Gew.%, vorzugsweise 0 bis 10 Gew.%, |
| Härter und Beschleuniger | 1,5 bis 5 Gew.%, |
| Treibmittel | 0,5 bis 10 Gew.%, |
| Füllstoffe (außer Fasern) | 5 bis 40 Gew.%, |
| Fasern | 0 bis 30 Gew.%, vorzugsweise 0,5 bis 10 Gew.%, |
| Pigmente | 0 bis 1 Gew-%. |
enthält, wobei die Summe der Gesamtbestandteile 100 Gew.% ergibt.

7. Verwendung nach einem oder mehreren der Ansprüche 1 bis 6, **dadurch gekennzeichnet, dass** das oder die Epoxidharz(e) vor ihrer Reaktion mit einem Härter einen Schmelz- oder Erweichungspunkt von mindestens 50 °C aufweisen.

8. Verwendung nach einem oder mehreren der Ansprüche 1 bis 7, **dadurch gekennzeichnet, dass** man die Formkörper herstellt, indem man das Stoffgemisch mit Hilfe eines Extruders bei einer Temperatur im Bereich von 50 bis 100°C durch eine Matrize extrudiert und nach Abkühlen auf eine Temperatur unterhalb von 50°C in Stücke schneidet.

9. Verwendung nach einem oder mehreren der Ansprüche 1 bis 7, **dadurch gekennzeichnet, dass** man die Formkörper herstellt, indem man das Stoffgemisch mit Hilfe eines Extruders bei einer Temperatur im Bereich von 50 bis 100°C in eine Spritzgussform einbringt und nach Abkühlen auf eine Temperatur unterhalb von 50°C entformt.

10. Fahrzeug oder metallisches Bauteil, **dadurch gekennzeichnet, dass** es mit Formkörpern gemäß der Verwendung nach einem oder mehreren der Ansprüche 1 bis 9 versteift oder verstärkt wurde.

11. Verfahren zur Verstärkung, Dämmung, Dämpfung und/oder Abdichtung von Hohlbauteilen, **dadurch gekennzeichnet, dass** man gemäß der Verwendung nach einem oder mehreren der Ansprüche 1 bis 9 einen Formkörper vor der Fertigstellung des Hohlbauteils an einer Innenwand des Hohlbauteils befestigt, das Hohlbauteil schließt und auf eine Temperatur im Bereich von 120 bis 220°C erwärmt, vorzugsweise für eine Zeitdauer im Bereich von 10 bis 150 Minuten.

## Claims

1. Use of extruded or injection-moulded mouldings for bracing and reinforcing components, in particular components for white goods, or bodywork components such as body frames, doors, boot lids, bonnets and/or roof parts in automotive construction, the extruded or injection-moulded mouldings consisting of a substance mixture containing a polymer blend which contains at least one epoxy resin and one or more thermoplastics, the thermoplastics being selected from those copolymers which contain at least three different monomers, and the proportion by weight of the thermoplastics in the entire substance mixture being in the range from 0.5 to 40 wt.%.

2. Use according to claim 1, **characterised in that** the thermoplastic(s) is/are selected from those in which at least one monomer is a hydrocarbon without heteroatoms and with at least one C=C double bond and at least one other monomer is an optionally substituted acrylate or an optionally substituted acrylic acid ester.

3. Use according to claim 2, **characterised in that** the thermoplastic(s) is/are selected from the following copolymers: styrene/butadiene/(meth)-acrylate, styrene/butadiene/(meth)acrylic acid ester, ethylene/(meth)-acrylic acid ester/glycidyl (meth)acrylic acid ester, ethylene/(meth)acrylic acid ester/maleic anhydride, which may in each case assume the form of random copolymers or block copolymers.

4. Use according to one or more of claims 1 to 3, **characterised in that** the substance mixture additionally contains a curing agent for the epoxy resin and/or a blowing agent.

5. Use according to one or more of claims 1 to 4, **characterised in that** the substance mixture contains the following components:
a) at least one epoxy resin,
b) at least one thermoplastic selected from those copolymers which contain at least three different monomers,
c) at least one blowing agent,
d) at least one curing agent,
e) at least one filler.

6. Use according to claim 5, **characterised in that** the substance mixture contains
| | |
|---|---|
| epoxy resin | 2 to 70 wt.%, preferably 15 to 60 wt.% |
| thermoplastic | 0.5 to 40 wt.%, preferably 5 to 30 wt.%, |
| reactive diluent | 0 to 15 wt.%, preferably 0 to 10 wt.%, |
| curing agent and accelerator | 1.5 to 5 wt.%, |
| blowing agent | 0.5 to 10 wt.%, |
| fillers (other than fibres) | 5 to 40 wt.%, |
| fibres | 0 to 30 wt.%, preferably 0.5 to 10 wt.%, |
| pigments | 0 to 1 wt.%, |
the total of all the components adding up to 100 wt.%.

7. Use according to one or more of claims 1 to 6, **characterised in that**, prior to reacting with a curing agent, the epoxy resin(s) has/have a melting or softening point of at least 50°C.

8. Use according to one or more of claims 1 to 7, **characterised in that** the mouldings are produced by extruding the substance mixture with the assistance of an extruder at a temperature in the range from 50 to 100°C through a die and, after cooling to a temperature of below 50°C, chopping it into pieces.

9. Use according to one or more of claims 1 to 7, **characterised in that** the mouldings are produced by introducing the substance mixture with the assistance of a extruder at a temperature in the range from 50 to 100°C into a injection mould and, after cooling to a temperature of below 50°C, demoulding.

10. A vehicle or metallic component, **characterised in that** it has been braced or reinforced with mouldings according to the use according to one or more of claims 1 to 9.

11. A method for reinforcing, insulating, damping and/or sealing hollow components, **characterised in that**, prior to manufacture of the hollow component, a moulding is fastened according to the use according to one or more of claims 1 to 9 to an internal wall of the hollow component, the hollow component is closed and heated to a temperature in the range from 120 to 220°C, preferably for a period of time in the range from 10 to 150 minutes.

## Revendications

1. Utilisation de corps façonnés extrudés ou moulés par injection pour le raidissage et le renforcement de pièces, en particulier de pièces pour des appareils électroménagers ou de pièces pour carrosserie, telles que des cadres de carrosserie, des portes, des couvercles de coffre, des capots de moteur et/ou des pièces de toit dans la construction automobile, les corps façonnés extrudés ou moulés par injection étant constitués d'un mélange de substances contenant un mélange de polymères qui contient au moins une résine époxyde et un ou plusieurs thermoplastiques, les thermoplastiques étant choisis parmi les copolymères qui contiennent au moins trois monomères différents et la proportion massique des thermoplastiques par rapport à la totalité du mélange de substances se situant dans la plage de 0,5 à 40% en poids.

2. Utilisation selon la revendication 1, **caractérisée en ce que** le ou les thermoplastiques sont choisis parmi ceux dans lesquels au moins un monomère représente un hydrocarbure sans hétéroatomes et comprenant au moins une double liaison C=C et au moins un autre monomère représente un acrylate le cas échéant substitué ou un ester d'acide acrylique le cas échéant substitué.

3. Utilisation selon la revendication 2, **caractérisée en ce que** le ou les thermoplastiques sont choisis parmi les copolymères suivants : styrène-butadiène-(méth)acrylate, styrène-butadiène-ester de l'acide (méth)acrylique, éthylène-ester de l'acide (méth)acrylique-ester glycidylique de l'acide (méth)acrylique, éthylène-ester de l'acide (méth)acrylique-anhydride de l'acide maléique, qui peuvent à chaque fois se trouver sous forme de copolymères statistiques ainsi que de copolymères séquencés.

4. Utilisation selon l'une ou plusieurs des revendications 1 à 3, **caractérisée en ce que** le mélange de substances contient en outre un durcisseur pour la résine époxyde et/ou un agent gonflant.

5. Utilisation selon l'une ou plusieurs des revendications 1 à 4, **caractérisée en ce que** le mélange de substances contient les composants suivants
a) au moins une résine époxyde,
b) au moins un thermoplastique choisi parmi les copolymères qui contiennent au moins trois monomères différents,
c) au moins un agent gonflant,
d) au moins un durcisseur,
e) au moins une charge.

6. Utilisation selon la revendication 5, **caractérisée en ce que** le mélange de substances contient
| | |
|---|---|
| une résine époxyde | 2 à 70% en poids, de préférence 15 à 60% en poids |
| un thermoplastique | 0,5 à 40% en poids, de préférence 5 à 30% en poids, |
| un diluant réactif | 0 à 15% en poids, de préférence 0 à 10% en poids, |
| un durcisseur et un accélérateur | 1,5 à 5% en poids, |
| un agent gonflant | 0,5 à 10% en poids, |
| des charges (à l'exclusion de fibres) | 5 à 40% en poids, |
| des fibres | 0 à 30% en poids, de préférence 0,5 à 10% en poids, |
| des pigments, | 0 à 1 % en poids, |
la somme de tous les constituants valant 100% en poids.

7. Utilisation selon l'une ou plusieurs des revendications 1 à 7, **caractérisée en ce que** la ou les résines époxyde présentent, avant leur réaction avec un durcisseur, un point de fusion ou de ramollissement d'au moins 50°C.

8. Utilisation selon l'une ou plusieurs des revendications 1 à 7, **caractérisée en ce qu'**on produit les corps façonnés **en ce qu'**on extrude le mélange de substances à l'aide d'une extrudeuse à une température dans la plage de 50 à 100°C à travers une matrice et on découpe en morceaux après refroidissement à une température inférieure à 50°C.

9. Utilisation selon l'une ou plusieurs des revendications 1 à 7, **caractérisée en ce qu'**on produit les corps façonnés **en ce qu'**on introduit le mélange de substances à l'aide d'une extrudeuse à une température dans la plage de 50 à 100°C dans un moule de moulage par injection et on démoule après refroidissement à une température inférieure à 50°C.

10. Voiture ou pièce métallique, **caractérisée en ce qu'**elle a été raidie ou renforcée par des corps façonnés selon l'utilisation selon l'une ou plusieurs des revendications 1 à 9.

11. Procédé pour le renforcement, l'isolation, l'amortissement et/ou l'étanchéité de pièces creuses, **caractérisé en ce qu'**on fixe selon l'utilisation selon l'une ou plusieurs des revendications 1 à 9 un corps façonné avant la fabrication de la pièce creuse sur une paroi interne de la paroi creuse, on ferme la pièce creuse et on chauffe à une température dans la plage de 120 à 220°C, de préférence pendant un laps de temps dans la plage de 10 à 150 minutes.
